# EUROPÄISCHE PATENTSCHRIFT

(11) **EP 2 998 144 B1**
(45) Veröffentlichungstag und Bekanntmachung des Hinweises auf die Patenterteilung: **31.01.2018**
(21) Anmeldenummer: 15183949.5
(22) Anmeldetag: 04.09.2015
(51) Int. Cl.: B60R 13/07, B60J 7/00, B60R 13/06, B60J 10/25

(54) **FAHRZEUG MIT DICHTUNGSPROFIL**
VEHICLE WITH A SEALING PROFILE
VEHICULE AYANT UN PROFIL D'ETANCHEITE

(30) Priorität: 22.09.2014 DE 102014218999
(43) Veröffentlichungstag der Anmeldung: 23.03.2016
(73) Patentinhaber: Magna Car Top Systems GmbH, 74321 Bietigheim-Bissingen (DE)
(72) Erfinder: ANDRIST, Peter, 74336 Brackenheim (DE); SCHUMACHER, Thorsten, 25495 Kummerfeld (DE)
(74) Vertreter: Rausch, Gabriele

(56) Entgegenhaltungen:
- DE-B3-102005 006 236
- JP-U- H0 350 521
- US-A1- 2011 017 116

## Beschreibung

### Gebiet der Erfindung

Die vorliegende Erfindung betrifft ein Fahrzeug mit mindestens einem Dichtungsprofil an der Fahrzeugkarosserie und mindestens einem Schlauchanschlussstutzen an dem mindestens einen Dichtungsprofil, der zur Verbindung mit einem Wasserablaufschlauch dient, sowie ein Verfahren zur Montage eines solchen Fahrzeugs.

### Stand der Technik

Bei Dichtungen für bewegbare Karosserieteile von Fahrzeugen sind die Dichtungen häufig in dafür vorgesehenen Aufnahmen in Form von Nuten oder Rinnen eingebracht und durch geeignete Befestigungsmittel, wie Schrauben, Clipse oder Formausstülpungen der Dichtungen in ihrer Lage fixiert. Eine weitere spezielle Ausführung für Fahrzeuge mit bewegbaren Karosserieteilen wie beispielsweise zu öffnenden Verdecken/Dachteilen in Cabrio-Fahrzeugen sind Dichtungen in Halteleisten aufgenommen und die Halteleisten an Kanten der bewegbaren Dachteile befestigt. Die Halteleisten können hierzu beispielsweise über Befestigungsmittel an den Kanten bewegbarer Karosserieteile oder an bewegbaren Lenkern der Dachkinematik angebracht sein.

Die Verwendung von Halteleisten speziell bei zu öffnenden Fahrzeugdächern wird immer dann gewählt, wenn lange Dichtungen mit aufwändigen Dichtungsprofilen zu Kanten benachbarter Karosserieteilen eines zu öffnenden Dachbereichs bewegt werden müssen. Hierbei ist es notwendig, dass die Dichtung eine kontrollierte Verformung erfährt, dauerhaft einen Spalt zwischen zwei Karosserieteilen überbrückt und somit verhindert, dass Wasser oder Schmutz durch den Dichtungsbereich eindringen kann. Weiter gilt es, dass die Dichtung das harmonische Erscheinungsbild der aneinander grenzenden Karosserieteile nicht stört.

Die Halteleisten sind in besondere Formen gebogene Bleche, die entweder mit der Karosserie verschraubt oder verschweißt sein können. Die Dichtungen sind vorteilhaft aus einem Kunststoff oder aus einem aus Gummi bestehendes Material als Extrusionsprofil hergestellt.

Alternative werden Dichtungen durch mit Halteabschnitten oder Haltstiften fixiert.

Häufig werden derartige Dichtungen aus Äthylen-Prothylen-DienKautschuk (EPDN) hergestellt, wobei die Dichtung gekrümmt als langgestrecktes Extrusionsprofil ausgeführt sein kann. Weiterhin ist es auch möglich, dass derartige Dichtungen als Meterware produziert werden, so dass Dichtungsstücke entsprechend einer benötigten Länge abgeschnitten werden können.

In Eckbereichen der zu bewegenden Dachteile können mehrere, jedoch wenigstens zwei Dichtungsprofile miteinander verschweißt werden oder über profilierte Eckstücke miteinander verbunden sein. Diese profilierten Eckstücke können entweder über Verschweißen in Form eines Verschmelzens mit den langgestreckten Dichtungsbauteilen verbunden sein, wobei auch Endstücke Verwendung finden, die in Hohlräume der Dichtungsprofile eingesteckt werden. In Bereichen, bei denen mehrere Dichtungen zusammenführen werden besondere Formstücke verwendet, die entsprechende Anschlussgeometrien für die angrenzenden Dichtungsprofile aufweisen. Auch hierbei kann ein Prinzip des Steckens oder des Verschwei-ßens zur Verbindung verwendet werden. Dabei kann es notwendig sein, dass zur genauen Positionierung derartiger Dichtungen Toleranzen der zu öffnenden Dachbereiche oder zur angrenzenden Karosserie ausgeglichen werden müssen.

Zur Entwässerung der Verdecke und der Dichtungen werden Schläuche angebunden, die gerade in Bereich der Eckstücke der Dichtungen angebracht sind.

Bisher ist es üblich, dass ein Dichtungsprofil, das für die Entwässerung vorbereitet ist, zunächst in eine dafür vorgesehenen Öffnung eines Teils des Fahrzeugs eingebaut wird. Das kann beispielsweise ein Dachmodul, oder ein Längsträger, oder einen Dachkappe sein. Das Dichtungsprofil ist als Formteil ausgebildet und weist einen für eine für den Schlauchanschluss geeignete Vorrichtung auf.

Ein Wasserablaufschlauch kann erst danach mit Hilfe eines Schlauchverbinders mit dem Dichtungsprofil verbunden werden. Bei dieser Bauweise ist es nachteilig, dass der Wasserablaufschlauch nachträglich durch Karosserieteile eingefädelt werden muss, wobei in der Karosserie angeordnete Bauteile wie Schrauben, Clipse oder Schottbleche hinderlich sind.

Oft weisen Dichtungen auch Hinterschnitte auf, was in der Herstellung aufwendig ist.

Aus der DE19711385 A1 ist eine Wasserablaufeinrichtung von einem Schiebedach bekannt, wobei Rohrstutzen verwendet wird. Die Art der Befestigung wird dabei nicht näher erläutert.

Aus der DE 102005006236 B3 ist eine Wasserablaufeinrichtung mit einem Anschlussstutzen bekannt, wobei der Ablauf einen Fangbecher aufweist und die Montage der Vorrichtung aufwändig ist. DE102005000943A1 zeigt eine Anordnung mit einer ringförmigen Dichtung und einer Ablauföffnung für ein Schiebedach. Die Dichtstruktur ist einfach und kann ein Faltdach nicht dichten. JPH0350521 offenbart eine gattungsgemässe Wasserablaufeinrichtung.

### Zusammenfassung der Erfindung

Es ist eine Aufgabe der Erfindung, ein Fahrzeug mit einer Wasserablaufanordnung bereitzustellen, wobei eine einfache Montage möglich ist.

Die Aufgabe wird gelöst mit einem Fahrzeug mit mindestens einem Dichtungsprofil an der Fahrzeugkarosserie und mindestens einem Schlauchanschlussstutzen an dem mindestens einen Dichtungsprofil, der zur Verbindung mit einem Wasserablaufschlauch dient, wobei von einer ersten Seite der Karosserie mindestens der Schlauchanschlussstutzen und das mindestens eine Dichtungsprofil montierbar ist, und dass von einer zweiten Seite der Karosserie, die von der ersten Seite abgewandt ist, der Wasserablaufschlauch montierbar ist.

Durch die vorteilhafte Anordnung ist eine automatische Montage möglich und das Anbringen des Schlauchs erfolgt auf einfache Art, wobei die Kräfte von der Karosserie und nicht vom Dichtprofil aufgenommen werden müssen. Das verwendete Dichtungsprofil verzichtet dabei auf jegliche Hinterschnitte.

Es ist weiterhin von Vorteil, dass die Karosserie zur Aufnahme des Dichtungsprofils eine quadratische Ausnehmung aufweist.

Vorteilhafterweise weist der Schlauchanschlussstutzen eine Vierkantverrastung auf, wobei der Schlauchanschlussstutzen verdrehsicher in die Öffnung des Dachmoduls montierbar ist.

Durch diese Ausgestaltung lässt sich eine einfache Verrastung erreichen. Besonders vorteilhaft ist die Anordnung, wenn die Ausnehmung in der Karosserie an einem Dachmodul eines Fahrzeuges mit zu öffnendem Verdeck angebracht ist.

Gerade in Cabriolets sind Dichtprofile entlang des Verdecks und auf Teilen des Verdecks wie der Dachkappe angebracht und besonders wichtig. Es ist besonders hilfreich, dass der Schlauchanschlussstutzen die Öffnung in der Karosserie abdichtet, so dass keine Zusatzmaßnahmen mehr notwendig sind.

Es ist von Vorteil, dass der Schlauchanschlussstutzen an seiner zum Fahrzeuginneren weisenden Seite eine Öffnung zur Aufnahme des Dichtungsprofils aufweist.

Vorteilhafterweise hat der Schlauchanschlussstutzen an der zur Fahrzeugaußenseite gewandten Seite einen Stutzen, wobei der Schlauchanschlussstutzen einen Stutzenabschnitt aufweist, der an der Außenmantelfläche als Tannenbaumprofil ausgebildet ist.

Weiterbildungen der Erfindung sind in den abhängigen Ansprüchen, der Beschreibung sowie den beigefügten Zeichnungen angegeben.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäßen Schlauchanschlusses
- Fig. 2: ist eine Darstellung des Schlauchanschlussstutzens.

### Detaillierte Beschreibung der Erfindung

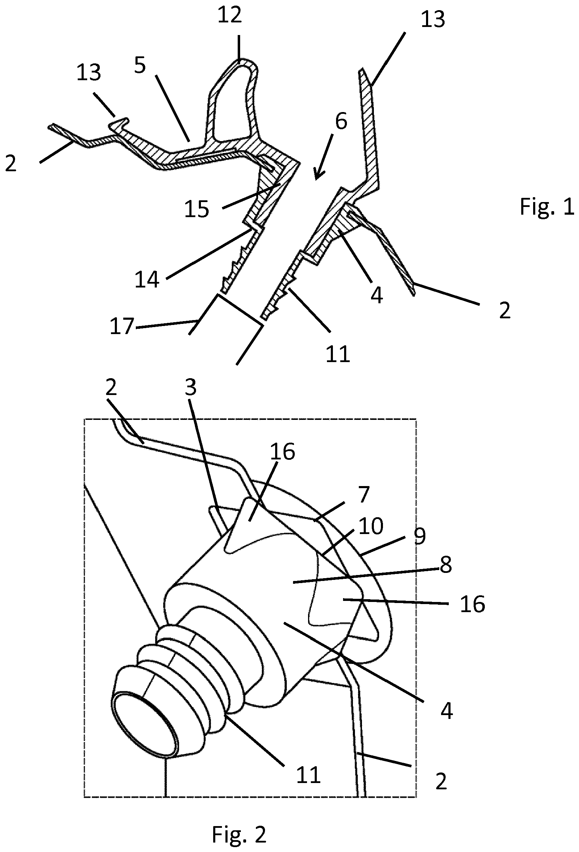

Figur 1 zeigt in einem Schnittbild einen Teil eines Fahrzeugs 1. Das Fahrzeug ist hier nur ausschnittsweise mit einem Teil der Karosserie 2 dargestellt, die von links nach rechts verläuft und im Bereich des erfinderischen Schlauchanschlusses eine Ausnehmung 3 aufweist.

Ein Schlauchanschlussstutzen 4 umgreift in diesem Schnittbild die beiden offenen Enden der Karosserie 2 und verjüngt sich von der Ausnehmung 3 zu einem Schlauchstutzen 11, der eine tannenbaum-förmige Verzahnung trägt. In diesem Bereich des Schlauchstutzens 11 ist einen Wasserablaufschlauch aufsteckbar.

Ein Dichtungsprofil 5 ist beispielhaft dargestellt und weist eine Hohlkammer 12 und mehrere Dichtungslippen 13 auf. Das Dichtungsprofil kann nach Anforderung des zu dichtenden Karosserieteils gestaltet sein. Das gezeigte Dichtungsprofil wäre beispielsweise an der Dachkappe, die im Sinne der Anmeldung ebenfalls einen Teil der Karosserie darstellt, eines Verdecks eines Cabriolets angebracht.

Das Schlauchanschlussstück 4 weist einen Öffnung 6 auf.

Zur Montage der Drainagelösung wird das Schlauchanschlussstück 4 von einer ersten Seite, in diesem Beispiel von oben in die Ausnehmung 3 der Karosserie 2 eingesetzt und verdreht, so dass an der zweiten Seite der Karosserie - in diesem Fall unterhalb der Karosserie, einen Verrastung erfolgt.

Dann wird das Dichtungsprofil 5 von derselben Seite wie das Schlauchanschlussstück in die Öffnung 6 des Schlauchanschlussstücks eingeschoben. In diesem Beispiel besitzt das Schlauchanschlussstück 4 eine Einkragung 14, die umlaufend oder teilweise als Anschlag für die Wände 15 des Dichtungsprofils dient. Die Bauteile Dichtungsprofil 5 und Schlauchanschlussstutzen 4 überlappen sich in einem schindelartigen Aufbau. Figur 2 zeigt ein Detail des Schlauchanschlussstücks 4. Erkennbar ist ein Teil der Karosserie 2, das eine quadratische Ausnehmung aufweist. Das Schlauchanschlussstück zeigt eine Dichtkuppe 9 mit einem oberen Vierkant. Daran schließt sich der untere Vierkant 8 an, der in der Ebene 10 gegen den oberen Vierkant oder die Dichtkuppe verdrehbar gestaltet ist. In einer einfacheren Ausführungsform ist die Dichtkuppe ohne Vierkant ausgebildet und das gesamte Schlauchanschlussstück wird gegenüber der Position beim Einführen in die quadratische Ausnehmung verdreht.

Der untere Vierkant ist als zylindrischer Körper mit auskragender Nase 16 an den Ecken des Quadraten hergestellt. Nach dem Einführen wird das Bauteil durch eine einfache Drehung um in etwa 45° verrastet.

Das zylindrische Bauteil verjüngt sich zu einem Schlauchstutzen 11 mit einer Zahnung oder Riffelung.

Beim Zusammenbau, wird das Schlauchanschlussstück von oben in die quadratische Ausnehmung gedrückt und um circa 45° verdreht. Dadurch liegen die Nasen zu den Ecken der Ausnehmung versetzt und verrasten das Bauteil zwischen den Nasen 16 und der Dichtkappe 9, die dichtend den Rand der Ausnehmung umgibt. Anschließt wird das Dichtprofil mit der zylindrischen Wandung 15 in die Öffnung 6, die in der Zeichnung nicht sichtbar ist, gesteckt.

Damit sind die Vorkehrungen getroffen, den Rest des Fahrzeugs oder des Dachteils zu vervollständigen. In einem weiteren Schritt kann der Wasserablaufschlauch auf den Stutzen 11 gesteckt werden, wobei über die Nasen 16 des Schlauchanschlussstücks die Kräfte auf die Karosserie übertragen werden.

### Bezugszeichenliste

- 1: Fahrzeug
- 2: Karosserie
- 3: Ausnehmung
- 4: Schlauchanschlussstutzen
- 5: Dichtungsprofil
- 6: Öffnung
- 7: Oberer Vierkant
- 8: Unterer Vierkant
- 9: Dichtkuppe
- 10: Ebene der Verrastung
- 11: Stutzenabschnitt
- 12: Hohlraum
- 13: Dichtlippe
- 14: Einkragung
- 15: zylindrische Wandung
- 16: Nase
- 17: Wasserablaufschlauch

## Patentansprüche

1. Fahrzeug (1) mit mindestens einem Dichtungsprofil (5) an der Fahrzeugkarosserie (2) und mindestens einem Schlauchanschlussstutzen (4) an dem mindestens einen Dichtungsprofil (5), der zur Verbindung mit einem Wasserablaufschlauch dient, wobei die Fahrzeugkarosserie (2) zur Aufnahmen des mindestens einen Dichtprofils (4) eine quadratische Ausnehmung (3) aufweist, wobei von einer ersten Seite der Fahrzeugkarosserie (2) der Schlauchanschlusstutzen (4) und das mindestens eine Dichtprofil (5) montiert ist, und wobei von einer zweiten Seite der Fahrzeugkarosserie (2), die von der ersten Seite abgewandt ist, der Wasserablaufschlauch montiert ist, **dadurch gekennzeichnet, dass** der Schlauchanschlussstutzen (4) eine Dichtkuppe (9) mit einem oberen Vierkant (7) zeigt, wobei sich daran ein unterer Vierkant (8) anschließt, der in einer Ebenen (10) gegen den oberen Vierkant (7) oder die Dichtkuppe (9) verdrehbar gestaltet ist.

2. Fahrzeug (1) nach Anspruch 1, **dadurch gekennzeichnet, dass** der Schlauchanschlussstutzen (4) eine Vierkantverrastung aufweist, wobei der untere Vierkant (8) als zylindrischer Körper mit auskragender Nase (16) an den Ecken des Quadranten hergestellt ist und wobei nach Einführen des Bauteils durch eine einfache Drehung um etwa 45° verrastet wird.

3. Fahrzeug (1) nach einem der vorhergehenden Ansprüchen, **dadurch gekennzeichnet, dass** die Ausnehmung (3) in der Fahrzeugkarosserie (2) an einem Dachmodul eines Fahrzeug mit zu öffnenden Verdeck angebracht ist.

4. Fahrzeug (1) nach zumindest einem der vorhergehenden Ansprüche, **dadurch gekennzeichnet, dass** der Schlauchanschlussstutzen (4) die Ausnehmung (3) in der Fahrzeugkarosserie (2) abdichtet.

5. Fahrzeug (1) nach zumindest einem der vorhergehenden Ansprüche, **dadurch gekennzeichnet, dass** der Schlauchanschlussstutzen (4) an einer ersten Seite eine Öffnung (6) zur Aufnahme des Dichtungsprofils (5) aufweist.

6. Fahrzeug (1) nach zumindest einem der vorhergehenden Ansprüche, **dadurch gekennzeichnet, dass** der Schlauchanschlussstutzen (4) an der zur ersten Seite abgewandten zweiten Seite einen Stutzen mit einem Stutzenabschnitt aufweist, der an der Außenmantelfläche als Tannenbaumprofil ausgebildet ist.

7. Verfahren zur Montage eines Fahrzeugs nach den vorhergehenden Ansprüchen mit einem Wasserablaufschlauch mit den folgenden Schritten :
Einsetzen eines Schlauchanschlussstutzens (4) nach den vorhergehenden Ansprüchen von einer ersten Seite in einem Ausschnitt (3) der Fahrzeugkarosserie (2)
Verrasten des Schlauchanschlussstutzens (4)
Einbringen eines Dichtprofils (5) in eine Öffnung (6) des Schlauchstutzens von derselben Seite,
Aufstecken eines Wasserablaufschlauches auch einen Stutzenabschnitts (11) des Schlauchanschlussstutzens von der zweiten Seite der Fahrzeugkarosserie (2) aus.

## Claims

1. Vehicle (1) with at least one sealing profile (5) on the vehicle body (2) and at least one hose connection stub (4) on the at least one sealing profile (5), said hose connection stub (4) serving for connection to a water drainage hose, wherein the vehicle body (2) has a square cutout (3) for receiving the at least one sealing profile (4), wherein the hose connection stub (4) and the at least one sealing profile (5) are fitted from a first side of the vehicle body (2) and wherein the water draining hose is fitted from a second side of the vehicle body (2) which faces away from the first side, **characterized in that** the hose connection stub (4) has a sealing protuberance (9) with an upper square (7), wherein a lower square (8) adjoins the latter, which is configured to be twistable in a plane (10) with respect to the upper square (7) or the sealing protuberance (9).

2. Vehicle (1) according to Claim 1, **characterized in that** the hose connection stub (4) has a square latching mechanism, wherein the lower square (8) is produced as a cylindrical body with a projecting lug (16) at the corners of the square, and wherein, after the introduction of the component, latching is brought about by simply rotating through about 45°.

3. Vehicle (1) according to either of the preceding claims, **characterized in that** the cutout (3) in the vehicle body (2) has been introduced into a roof module of a vehicle with an opening top.

4. Vehicle (1) according to at least one of the preceding claims, **characterized in that** the hose connection stub (4) seals off the cutout (3) in the vehicle body (2).

5. Vehicle (1) according to at least one of the preceding claims, **characterized in that** the hose connection stub (4) has on a first side an opening (6) for receiving the sealing profile (5).

6. Vehicle (1) according to at least one of the preceding claims, **characterized in that** the hose connection stub (4) has, on the second side facing away from the first side, a stub with a stub portion which is formed as a Christmas-tree profile on its outer lateral surface.

7. Method for fitting a vehicle according to the preceding claims with a water drainage hose, having the following steps of:
inserting a hose connection stub (4) according to the preceding claims from a first side in a cutout (3) in the vehicle body (2)
latching the hose connection stub (4)
introducing a sealing profile (5) into an opening (6) in the hose connection stub from the same side,
plugging a water drainage hose onto a connection-stub portion (11) of the hose connection stub from the second side of the vehicle body (2).

## Revendications

1. Véhicule (1) ayant au moins un profil d'étanchéité (5) au niveau de la carrosserie du véhicule (2) et au moins un embout de raccord de tuyau (4) au niveau de l'au moins un profil d'étanchéité (5), qui sert au raccordement à un tuyau d'écoulement d'eau, la carrosserie du véhicule (2) présentant un évidement parallélépipédique (3) pour recevoir l'au moins un profilé d'étanchéité (4), l'embout de raccord de tuyau (4) et l'au moins un profilé d'étanchéité (5) étant montés depuis un premier côté de la carrosserie du véhicule (2) et le tuyau d'écoulement d'eau étant monté depuis un deuxième côté de la carrosserie du véhicule (2) qui est opposé au premier côté, **caractérisé en ce que** l'embout de raccord de tuyau (4) indique un sommet d'étanchéité (9) avec un carré supérieur (7) auquel se raccorde un carré inférieur (8) qui est configuré de manière à pouvoir tourner dans un plan (10) par rapport au carré supérieur (7) ou au sommet d'étanchéité (9).

2. Véhicule (1) selon la revendication 1, **caractérisé en ce que** l'embout de raccord de tuyau (4) présente un emboîtement carré, le carré inférieur (8) étant réalisé sous forme de corps cylindrique avec des picots saillants (16) au niveau des coins du carré et après l'insertion du composant, étant emboîté par une simple rotation d'environ 45°.

3. Véhicule (1) selon l'une quelconque des revendications précédentes, **caractérisé en ce que** l'évidement (3) dans la carrosserie du véhicule (2) est monté au niveau d'un module de toit d'un véhicule avec une capote ouvrable.

4. Véhicule (1) selon au moins l'une quelconque des revendications précédentes, **caractérisé en ce que** l'embout de raccord de tuyau (4) ferme hermétiquement l'évidement (3) dans la carrosserie du véhicule (2).

5. Véhicule (1) selon au moins l'une quelconque des revendications précédentes, **caractérisé en ce que** l'embout de raccord de tuyau (4) présente au niveau d'un premier côté une ouverture (6) pour recevoir le profil d'étanchéité (5).

6. Véhicule (1) selon au moins l'une quelconque des revendications précédentes, **caractérisé en ce que** l'embout de raccord de tuyau (4) présente au niveau du deuxième côté opposé au premier côté un embout avec une portion d'embout qui est réalisée sous forme de profilé en sapin au niveau de la surface d'enveloppe extérieure.

7. Procédé de montage d'un véhicule selon les revendications précédentes, comprenant un tuyau d'écoulement d'eau, comprenant les étapes suivantes :
insertion d'un embout de raccord de tuyau (4) selon les revendications précédentes depuis un premier côté dans une découpe (3) de la carrosserie du véhicule (2),
emboîtement de l'embout de raccord de tuyau (4),
introduction d'un profil d'étanchéité (5) dans une ouverture (6) de l'embout de tuyau, depuis le même côté,
enfichage d'un tuyau d'écoulement d'eau sur une portion d'embout (11) de l'embout de raccord de tuyau depuis le deuxième côté de la carrosserie du véhicule (2).
